(19) Europäisches Patentamt
European Patent Office
Office européen des brevets

(11) EP 0 211 431 B2

(12) NEW EUROPEAN PATENT SPECIFICATION

(45) Date of publication and mention of the opposition decision:
**08.09.1999 Bulletin 1999/36**

(45) Mention of the grant of the patent:
**27.05.1992 Bulletin 1992/22**

(21) Application number: **86110782.9**

(22) Date of filing: **04.08.1986**

(51) Int Cl.⁶: **C08L 27/16**, C08L 27/12, C08L 27/10, C08K 5/00 // (C08K5/00, 5:13, 5:14, 5:19, 5:49, 5:50)

(54) **Covulcanizable compositions of fluoroelastomers having improved chemical stability**

Covulkanisierbare Gemische von Fluorelastomeren mit verbesserter chemischer Beständigkeit

Compositions d'élastomères fluorés covulcanisables ayant une stabilité chimique améliorée

(84) Designated Contracting States:
**CH DE FR GB LI NL SE**

(30) Priority: **05.08.1985 IT 2186785**

(43) Date of publication of application:
**25.02.1987 Bulletin 1987/09**

(73) Proprietor: **AUSIMONT S.p.A.**
**I-20121 Milano (IT)**

(72) Inventors:
- **Arcella, Vincenzo**
  **I-28100 Novara (IT)**
- **Tommasi, Giulio**
  **I-20100 Milan (IT)**
- **Brinati, Giulio**
  **I-20100 Milan (IT)**
- **Cirillo, Gianna**
  **I-16124 Genova (IT)**
- **Costanzi, Fabio**
  **I-20097 San Donato Milanese Milan (IT)**

(74) Representative: **Barz, Peter, Dr. et al**
**Patentanwalt**
**Kaiserplatz 2**
**80803 München (DE)**

(56) References cited:
**US-A- 3 876 654**
**US-A- 4 214 060**
**US-A- 4 530 971**

- **Kirk Othmer, "Encyclopedia of Chemical Technology", vol 8, 1979. John Wiley & Sons, New York, pages 500-509**
- **Rubber World, Sept. 1984, vol. 190, no. 6, pp. 31-38**

Remarks:
The file contains technical information submitted after the application was filed and not included in this specification



Printed by Jouve, 75001 PARIS (FR)

## Description

The present invention relates to covulcanizable compositions of fluoroelastomers having an improved chemical stability.

Fluoroelastomers based on vinylidene fluoride and vulcanized using a bisphenol or dihydroxyl system (Kirk Othmer, Encyclopaedia of Chemical Technology, Vol. 8, page 506, 1979) are excellent products which are utilized in various fields of industry, in particular in the sectors of motor vehicles, of oil and of energy in genera!.

In the automotive sector, the fluoroelastomers are mainly utilized in the fuel circulation system or as components of parts of the motor and of parts of the gearbox-differential-driveshaft aggregate. In the first case there may be cited, as examples of appliances, diaphragms for feed pumps, valve seats, check valves, flexible hoses and, generally, sealing gaskets for the fuel. In the second case, analogous examples are gaskets for gears, sealing jackets for cylinders in diesel motors, gaskets for the crankshaft, check valves for the exhaust gases, gaskets such as oil seal rings.

In the oil and energy field the fluoroelastomers are utilized for appliances which are in direct contact with the crude oil, particularly at high temperatures and pressures, such as e.g. seals, valves and pumps or parts thereof.

In this field, an important utility for the fluoroelastomers is represented by the expansion joints used in the discharge lines of flue gases in thermoelectrical stations, where a high resistance to high temperatures and to the corrosive action of the acid gases is required.

In these sectors, as well as in others, such as the electrical and electronic field, the fluoroelastomers are utilized because of their high thermal stability and chemical resistance even at high temperatures. In the last years, however, and in specific fields of use, particular technological requirements have arisen, which cannot be met by the presently available articles vulcanized by means of a bisphenol or dihydroxyl system. Particularly involved is the chemical stability under very severe operating temperature conditions in the presence of vapours, of mineral acids, of lubricating fluids characterized by a high aggressivity, such as the oils of series SF containing compounds which exhibit a high aggressivity towards the fluoroelastomers based on vinylidene fluoride.

Furthermore, a general improvement of the processibility characteristics of the blends is required, in order to permit the molding of articles such as oil seal rings, and the possibility of easily extruding, even with complex profiles, the blends for obtaining suitable preforms.

The problem of the chemical stability has been solved by the use of peroxide vulcanization. This vulcanization, however, does not meet the above-mentioned processibility requirements, in particular as regards molding and extrusion. Furthermore, the processibility itself proves to be less safe (Rubber Chemistry and Technology, Vol. 55, page 906, 1982;. and the results in the compression set test are also much poorer (Kirk Othmer, Encyclopaedia of Chemical Technology, Vol.8 page 510, 1979).

EP-A-136 596 discloses covulcanized compositions which permit certain improvements but, nevertheless, under certain conditions exhibit less than optimum chemical, thermal and mechanical properties.

Thus, it is an object of the present invention to provide a covulcanizable composition of fluoroelastomers which overcomes the shortcomings described above. More particularly, it is an object of the present invention to provide a covulcanizable composition of fluoroelastomers based on vinylidene fluoride which permits a higher processing safety, a higher chemical and thermal stability and better mechanical characteristics.

In accordance with the present invention these and other objects are achieved by a covulcanizable elastomeric composition comprising:

A) 55-100% by weight of a fluoroelastomer consisting of 35-80 mol % of vinylidene fluoride, 15-35 mol % of perfluoropropene, 0-30% of tetrafluoroethylene, and containing from 0.001 to 2% by weight of bromine;
B) 0-45% by weight of a copolymer consisting of 40-60 mol % of tetrafluoroethylene and 40-60 mol % of propylene;
C) 0.7-2.5 parts per 100 parts of (A)+(B) of an organic polyhydroxy (preferably dihydroxy) compound;
D) 0.3-1.5 parts per 100 parts of (A)+(B) of a quaternary compound of ammonium, phosphonium or of aminophosphonium;
E) 0.4-5 parts per 100 parts of (A)+(B) of an organic peroxide;
F) 1-5 parts per 100 parts of (A)+(B) of a peroxide crosslinking coagent, a composition consisting of

(a) 100 parts by weight of a copolymer consisting of 35% by weight of vinylidene fluoride, 34% by weight of -hexafluoropropylene 29% by weight of tetrafluoroethylene and 2% by weight of bromotetrafluorobutene;
(b) 1.7 parts by weight of a composition consisting of 33% organophosphonium salt plus 67% fluoroelastomer;
(c) 4.0 parts by weight of a composition consisting of 50% dihydroxy aromatic compound plus 50% fluoroelastomer;
(d) 6 parts by weight of ZnO;
(e) 2 parts by weight of $Ca(OH)_2$;
(f) 60 parts by weight of MT black;

(g) 25 parts by weight of silica;
(h) 1.3 parts by weight of process aids;
(i) 3 parts by weight of triallylisocyanurate; and
(j) 3 parts by weight of 2,5-dimethyl-2,5-bis(t-butylperoxy)hexane

being excluded.

The elastomers A) are known products and may be prepared according to the methods described in Kirk Othmer, Encyclopaedia of Chemical Technology, Vol. 8, page 500 ff, 1979.

Bromine is introduced into the copolymer by using either a comonomer containing bromine such as bromotrifluoroethylene or ethylbromovinylether, or by using, as a chain transfer agent, a product of the general formula: $C_a W_b Br_c$
in which

W may be fluorine or chlorine
a is an integer from 1 to 4
c is an integer from to (2a + 2)
b is equal to (2a + 2 - c).

The chain transfer agent is added during the reaction in amounts ranging from 0.01 to 0.3 mol % based on the total number of moles of the components. The preferred chain transfer agent is $CF_2Br_2$.

The copolymers B) are known in literature and may be prepared according to the methods described in Rubber Chemistry and Technology, Vol. 50, page 403, 1977, or are commercially available under the trade name AFLAS.

The organic polyhydroxy or dihydroxy compounds C) are known compounds for the crosslinking of elastomers based on vinylidene fluoride and can be selected from di-, tri- and tetrahydroxy derivatives of benzene, naphthalene, or anthracene and bisphenols of the general formula

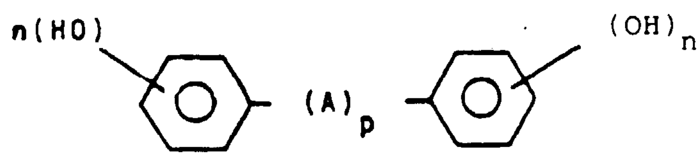 (1)

wherein A is a difunctional aliphatic, cycloaliphatic or aromatic group containing up to 13 carbon atoms, or a thio, oxy, carbonyl, sulphinyl or sulphonyl group and wherein A may be optionally substituted by at least one chlorine or fluorine atom; p is 0 or 1; and n is 1 or 2. Any aromatic ring of the polyhydroxy compound can be optionally substituted by at least one chlorine, fluorine or bromine atom or by a group -CHO or by a carboxy or acyl group of general formula -COR, with R being OH or an alkyl, aryl or cycloalkyl group having up to 8 carbon atoms.

In formula (1) the groups OH can be present in any position in both rings.

Examples of products of formula (1) are described in US-A-3 876 654. Preferred compounds are hydroquinone and bisphenol AF.

The compounds D) are known as accelerating agents for the crosslinking of elastomers based on vinylidene fluoride and can be, e.g.:

D1 - quaternary compounds of ammonium selected from those having the general formulae:

$$[N R_1 R_2 R_3 R_4]^+_q X^{(-)q} \qquad (2)$$

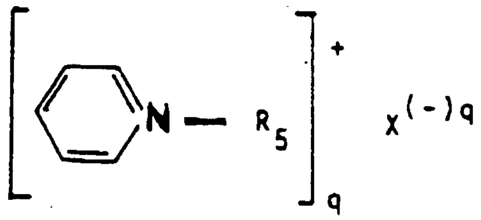 (3)

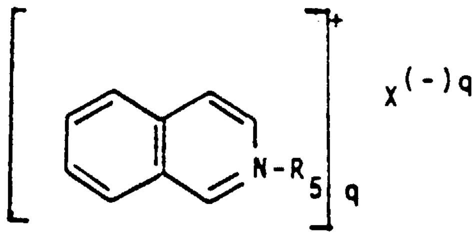 (4)

wherein $R_1$, $R_2$, $R_3$ and $R_4$ are equal to or different from each other and represent alkyl, fluoroalkyl, aralkyl, polyoxyalkene or polyoxyfluoroalkene groups containing up to 20 carbon atoms, provided that at least two out of $R_1$, $R_2$, $R_3$ and $R_4$ are an alkyl or aralkyl group; $R_5$ is an alkyl group containing 1 to 20 carbon atoms; X is an anion selected from hydroxyl, halide, sulphate, sulphite, carbonate, pentachlorothiophenolate, tetrafluoroborate, hexafluorosilicate, hexafluorophosphate, didmethylphosphate of a carboxylate or dicarboxylate with an alkyl or aralkyl or aryl group having up to 20 carbon atoms; q is 1 or 2 and represents the valence of X.

D2 - quaternary phosphonium compounds of the general formula

$$[P\ R_6\ R_7\ R_8\ R_9]^+Z^{-(r)} \qquad (5)$$

wherein P may be, besides phosphorus, also arsenic and antimony, and wherein $R_6$, $R_7$, $R_8$ and $R_9$ are selected from an alkyl, aryl, arylalkyl, alkenyl group having up to 20 carbon atoms, chlorine, fluorine, bromine, cyano, $-OR_{10}$ and $-COOR_{10}$ or analogous substituted groups, $R_{10}$ being an alykl, aryl, arylalkyl or alkenyl group having up to 20 carbon atoms; Z is an anion selected from halide, sulphate, sulphite, carbonate, pentachlorothiophenolate, tetrafluoroborate, hexafluorosilicate, hexafluorophosphate, dimethyl phosphate, or a carboxylate or dicarboxylate with an alkyl or aralkyl or alkenyl group containing up to 20 carbon atoms; r is 1 or 2 and represents the valence of Z.

D3 - aminophosphonium compounds of the general formula

$$\left[P\ (N\ R'\ R'')_s\ R'''_{4-s}\right]^+_m\ Y^{m-} \qquad (6)$$

wherein R', R" and R"' are equal to or different from each other and represent alkyl, cycloalkyl, aryl, arylalkyl, oxyalkyl or polyoxyalkyl groups with a free or etherified hydroxy end group containing up to 18 carbon atoms and optionally containing, as substituents, a halogen, cyano, hydroxy or carboalkoxy group, wherein R' and R" may be linked to each other by means of a nitrogen atom to form a heterocyclic ring; s is an integer from 1 to 4, m is an integer from 1 to 3, equal to the valence of ion Y, and Y is an organic or inorganic anion having the valence m.

The products of general formulae (2) to (4) are described in more detail in GB-A-1 356 344; the compounds of formula (5) are described in US-A-3 876 654 and the compounds of formula (6) are described in GB-A-2 010 285.

The organic peroxides E) are generally used for the peroxide crosslinking of elastomers. They are described along with suitable peroxide crosslinking coadjuvants F), such as triallylisocyanurate (TAIC), in Rubber Chemistry and Technology, Vol. 51, page 940, 1978.

Examples of organic peroxides utilizable in the compositions of the present invention are 2,5-dimethyl-2,5-di-t-butylperoxy-hexane and the corresponding 3-hexine derivative.
The working conditions for preparing the blends and for vulcanizing them are substantially the same as those usually employed for fluoroelastomers, such as described in Kirk Othmer Encyclopaedia of Chemical Technology, Vol. 8, page 500 ff., 1979.
The covulcanizable compositions of the present invention exhibit an excellent extrudabilitiy, an excellent stability to the oils SF and an excellent stability to water vapour and water glycol mixtures at high temperatures and, when injection-molded, they do not give rise to any problems connected with demoulding.
The following examples are given in order to further illustrate the present invention without, however, limiting it in any way.

Example 1

A fluoroelastomer (A) consisting of 50 mol % of vinylidene fluoride, 25 mol % of perfluoropropene, 25 mol % of tetrafluoroethylene and containing 0.12% by weight of bromine (Mooney viscosity ML (1+4) at 100°C = 90) was mixed in a cylinder mixer with a copolymer (B) containing equimolar amounts of tetrafluoroethylene and propylene. The weight ratio of fluoroelastomer (A) to copolymer (B) was equal to 70/30.
During the mixing step, the following vulcanizing agents were added:

| | Parts by weight |
|---|---|
| Fluoroelastomer | 70 |
| Copolymer | 30 |
| Bisphenol AF | 1.15 |
| Accelerating agent | 0.51 |
| 2,5-dimethyl-2,5-di-t-butylperoxy hexane | 2 |
| Triallylisocyanurate | 2 |
| $Ca(OH)_2$ | 3 |
| MgO | 5 |
| Carnauba wax | 1 |
| Black MT | 30 |

As an accelerating agent an aminophosphonium salt of formula

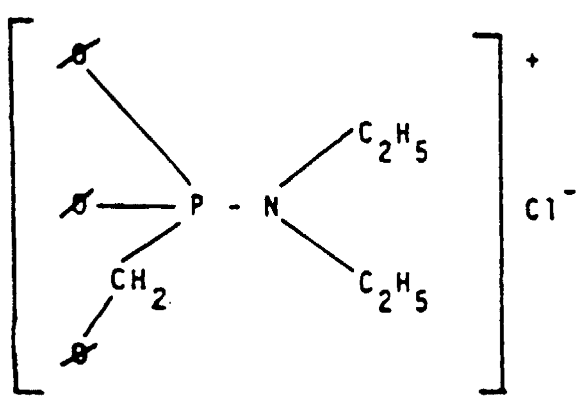

was used.
The mixture thus obtained was examined by means of a Monsanto rheometer according to ASTM D 2705 at 180°C, arc 5, 100 Hz, without preheating, and the following results were obtained:

| | |
|---|---|
| Minimum torque | 20 |
| Ts 10 | 2 min 21 sec |
| Maximum torque (after 5 min) | 64 |

The mixture was vulcanized in a press, in the form of O-rings and plates, at 170°C for 10 minutes, starting pressure 2.5 MPa, final pressure 17.5 MPa, and was subjected to a postvulcanization in an oven at 250°C for 24 hours.
The following mechanical characteristics were obtained:

| | |
|---|---|
| 100% modulus | 6.6 MPa |
| tensile strength (1) | 14.1 MPa |
| elongation at break (1) | 272 % |
| hardness (2) | 79 Shore A |
| compression set (O-ring) (3) | 40 % |

(1) ASTM D 412 - 80
(2) ASTM D 1415 - 81
(3) ASTM D 395 - 78

The vulcanized test pieces were subjected to a chemical resistance test in BP Olex (oil SF) at 150°C for 21 days.
The results were as follows:

| | |
|---|---|
| 100% modulus variation | + 11.8 % |
| tensile strength variation | - 6 % |
| elongation at break variation | - 25 % |
| hardness variation | - 2 Shore A |

Example 2

A fluoroelastomer consisting of 50 mol % of vinylidene fluoride, 25 mol % of perfluoropropene, 25 mol % of tetrafluoroethylene and containing 0.12% by weight of bromine (Mooney ML viscosity (1+4) at 100°C = 90) was mixed in a cylinder mixer with the following vulcanizing agents:

| | Parts by weight |
|---|---|
| Fluoroelastomer | 100 |
| Bisphenol AF | 1.15 |
| Accelerating agent | 0.51 |
| 2,5-dimethyl-2,5-di-t-butylperoxy hexane | 2 |
| Triallylisocyanurate | 2 |
| $Ca(OH)_2$ | 3 |
| MgO | 5 |
| Carnauba wax | 1 |
| Black MT | 30 |

The same product as in example 1 was utilized as an accelerating agent. The mixture thus obtained was examined by means of a Monsanto rheometer according to ASTM D 2705 at 100°C, arc 5, 100 Hz, without preheating and the following results were obtained:

| | |
|---|---|
| Minimum torque | 18 |
| Ts 10 | 2 min |
| Maximum torque | 74 |

The mixture was vulcanized in a press, in the form of O-rings and plates, at 170°C for 10 minutes, initial pressure 2,5 MPa, final pressure 17.5 MPa, and was subjected to a postvulcanization in an oven at 250°C for 24 hours.
The following mechanical characteristics were obtained:

| | |
|---|---|
| 100% modulus (1) | 5.8 MPa |

(1) ASTM D 412 - 80

(continued)

| | |
|---|---|
| Tensile strength (1) | 18.5 MPa |
| Elongation at break (1) | 271 % |
| Hardness (2) | 78 Shore A |
| Compression set (0-ring) (3) | 38 % |

(1) ASTM D 412 - 80
(2) ASTM D 1415 - 81
(3) ASTM D 395 - 78.

The vulcanized test pieces were subjected to a chemical resistance test in BP olex (oil SF) at 150°C for 21 days. The results were as follows:

| | |
|---|---|
| 100% modulus variation | + 7 % |
| Tensile strength variation | - 14% |
| Elongation at break variation | - 30 % |
| Hardness variation | - 2 Shore A |

## Claims

**1.** Covulcanizable compositions of fluoroelastomers comprising:

A) 55-100% by weight of a fluoroelastomer consisting of 40-85 mol % of vinylidene fluoride, 15-35 mol % of perfluoropropene, 0-30 mol % of tetrafluoroethylene, and containing from 0.001 to 2% by weight of bromine;
B) 0-45% by weight of a copolymer consisting of 40-60 mol % of tetrafluoroethylene and 40-60 mol % of propylene;
C) 0.7-2.5 parts per 100 parts of (A)+(B) of an organic polyhydroxy compound;
D) 0.3-1.5 parts per 100 parts of (A)+(B) of a quaternary ammonium, phosphonium or aminophosphonium compounds;
E) 0.4-5 parts per 100 parts of (A)+(B) of an organic peroxide;
F) 1-5 parts per 100 parts of (A)+(B) of a peroxide crosslinking coagent, a composition consisting of

(a) 100 parts by weight of a copolymer consisting of 35% by weight of vinylidene fluoride, 34% by weight of hexafluoropropylene, 29% by weight of tetrafluoroethylene and 2% by weight of bromotetrafluorobutene;

(b) 1.7 parts by weight of a composition consisting of 33% organophosphonium salt plus 67% fluoroelastomer;

(c) 4.0 parts by weight of a composition consisting of 50% dihydroxy aromatic compound plus 50% fluoroelastomer;

(d) 6 parts by weight of ZnO;

(e) 2 parts by weight of $Ca(OH)_2$;

(f) 60 parts by weight of MT black;

(g) 25 parts by weight of silica;

(h) 1.3 parts by weight of process aids;

(i) 3 parts by weight of triallyl isocyanurate; and

(j) 3 parts by weight of 2,5-dimethyl-2,5-bis(t-butylperoxy)hexane

being excluded.

**2.** A composition according to claim 1 wherein bromine has been introduced into the fluoroelastomer by using, as a chain transfer agent during copolymerization, a product of the general formula

$$C_a W_b Br_c$$

wherein

W is fluorine or chlorine
a is an integer from 1 to 4
c is an integer from 1 to (2a + 2)
b is equal to (2a + 2 - c).

**3.** A composition according to claim 2, wherein the chain transfer agent has been added during the reaction in an amount ranging from 0.01 to 0.3 mol %, based on the total number of moles of the components.

**4.** A composition according to claims 2 and 3, wherein the chain transfer agent is $CF_2Br_2$.

**5.** A composition according to any one of claims 1 to 4, wherein the organic polyhydroxy compound is selected from di- tri- and tetrahydroxy derivatives of benzene naphthalene or anthracene and bisphenols of the general formula

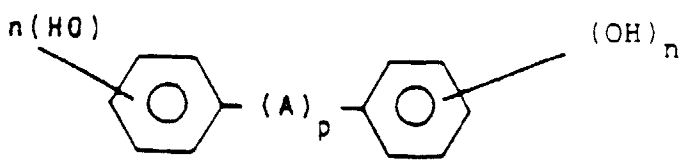

wherein A is a difunctional aliphatic, cycloaliphatic or aromatic group containing up to 13 carbon atoms or a thio, oxy, carbonyl, sulphinyl or sulphonyl group and wherein A may be optionally substituted by at least one chlorine or fluorine atom; p is 0 or 1; n is 1 or 2; and any aromatic ring of the polyhydroxy compound may be optionally substituted by at least one substituent selected from chlorine, fluorine or bromine atoms or a -CHO group or a carboxy or acyl group of the general formula -COR, R being OH or an alkyl, aryl or cycloalkyl group having up to 8 carbon atoms.

**6.** A composition according to any one of claims 1-5, wherein the quaternary ammonium compound is selected from those having the general formulae:

$$[N R_1 R_2 R_3 R_4]^{+}_{q} X^{(-)q} \quad (2)$$

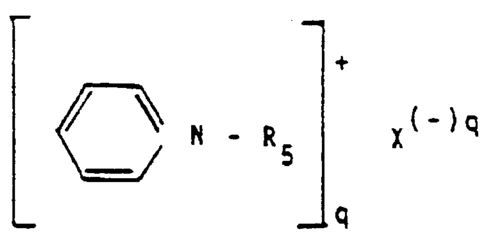

(3)

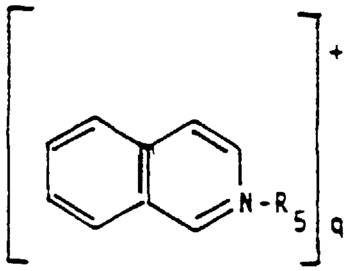

$X^{(-)q}$ (4)

wherein $R_1$, $R_2$, $R_3$ and $R_4$ are equal to or different from each other and represent an alkyl, fluoroalkyl, aralkyl, polyoxyalkylene or polyoxyfluoroalkene group having up to 20 carbon atoms, provided that at least two out of $R_1$, $R_2$, $R_3$ and $R_4$ are an alkyl or aralkyl group; $R_5$ is an alkyl group having 1 to 20 carbon atoms; X is an anion selected from hydroxy, halide, sulphate, sulphite, carbonate, pentachlorothiophenolate, tetrafluoroborate, hexafluorosilicate, hexafluorophosphate, dimethyl phosphate, or a carboxylate or dicarboxylate with an alkyl or aralkyl or aryl group having up to 20 carbon atoms; q is 1 or 2 and represents the valence of X.

**7.** A composition according to any one of claims 1-5, wherein the quaternary phosphonium compound is selected from those having the general formula

$$[P\ R_6\ R_7\ R_8\ R_9]_r^+ Z^{-(r)} \qquad (5)$$

wherein P may be, besides phosphorus also, arsenic and antimony, and wherein $R_6$, $R_7$, $R_8$ and $R_9$ are selected from an alkyl, aryl arylalkyl, alkenyl group having up to 20 carbon atoms, chlorine, fluorine, bromine, cyano, $-OR_{10}$ and $-COOR_{10}$ or analogous substituted groups, $R_{10}$ being an alkyl, aryl, arylalkyl or alkenyl group containing up to 20 carbon atoms; Z is an anion selected from halide, sulphate, sulphite, carbonate, pentachlorothiophenolate, tetrafluoroborate, hexafluorosilicate, hexafluorophosphate, dimethyl phosphate, or a carboxylate or dicarboxylate with an alkyl or aralkyl or alkenyl group having up to 20 carbon atoms; r is 1 or 2 and represents the valence of Z.

**8.** A composition according to any one of claims 1-5, wherein the quaternary aminophosphonium compound is selected from those having the general formula

$$\left[P\ (N\ R'\ R'')_s\ R'''_{4-s}\right]_m^+ \ Y^{m-} \qquad (6)$$

wherein R', R" and R"' are equal to or different from each other and represent an alkyl, cycloalkyl, aryl, arylalkyl, oxyalkyl or polyoxyalkyl group with a free or etherified hydroxy end group, containing up to 18 carbon atoms and, optionally, containing, as substituents, one or more halogen atoms, cyano, hydroxy or carboalkoxy groups, and wherein
R' and R" may be linked to each other by a nitrogen atom to form a heterocyclic ring;
s is an integer from 1 to 4, m is an integer from 1 to 3, equal to the valence of Y, and Y is an organic or inorganic anion of valence m.

**9.** A composition according to any one of claims 1 to 8, wherein the organic peroxide is 2,5-dimethyl-2,5-di-t-butylperoxy hexane or the corresponding derivative of 3-hexine.

**10.** A composition according to any one of claims 1 to 9, wherein the peroxide crosslinking coagent is triallylisocyanurate.

## Patentansprüche

1. Covulkanisierbare Zusammensetzungen von Fluorelastomeren, umfassend

   A) 55 - 100 Gew.-% eines Fluorelastomers, das aus 40 - 85 Mol-% vinylidenfluorid, 15 - 35 Mol-% Perfluorpropen und 0 - 30 Mol-% Tetrafluorethylen besteht und 0,001 bis 2 Gew.-% Brom enthält;
   B) 0 - 45 Gew.-% eines Copolymers, das aus 40 - 60 Mol-% Tetrafluorethylen und 40 - 60 Mol-% Propylen besteht;
   C) 0,7 - 2,5 Teile pro 100 Teile (A) + (B) einer organischen Polyhydroxyverbindung;
   D) 0,3 - 1,5 Teile pro 100 Teile (A) + (B) einer quartären Ammonium-, Phosphonium- oder Aminophosphoniumverbindung;
   E) 0,4 - 5 Teile pro 100 Teile (A) + (B) eines organischen Peroxids;
   F) 1 - 5 Teile pro 100 Teile (A) + (B) eines vernetzenden Peroxid-Coagens,

   wobei eine Zusammensetzung, die besteht aus

   (a)100 Gewichtsteilen eines Copolymers, welches aus 35 Gew.-% Vinylidenfluorid, 34 Gew.-% Hexafluorpropylen, 29 Gew.-% Tetrafluorethylen und 2 Gew.-% Bromtetrafluorbuten besteht;
   (b)1,7 Gewichtsteilen einer Zusammensetzung, die aus 33 Gew.-% Organophosphoniumsalz plus 67 Gew.-% Fluorelastomer besteht;
   (c)4,0 Gewichtsteilen einer Zusammensetzung, die aus 50% dihydroxyaromatischer Verbindung plus 50% Fluorelastomer besteht;
   (d)6 Gewichtsteilen ZnO;
   (e)2 Gewichtsteilen $Ca(OH)_2$;
   (f)60 Gewichtsteilen MT-Ruß;
   (g)25 Gewichtsteilen Siliciumdioxid;
   (h)1,3 Gewichtsteilen Verarbeitungshilfsstoffen;
   (i)3 Gewichtsteilen Triallylisocyanurat; und
   (j) 3 Gewichtsteilen 2,5-Dimethyl-2,6-bis (t-butylperoxy)-hexan;

   ausgeschlossen ist.

2. Zusammensetzung nach Anspruch 1, worin Brom in das Fluorelastomer eingeführt worden ist, indem als Kettenübertragungsmittel während der Copolymerisation ein Produkt der allgemeinen Formel

$$C_a\, W_b\, Br_c$$

   verwendet worden ist, worin

   W Fluor oder Chlor ist;
   a eine ganze Zahl von 1 bis 4 ist;
   c eine ganze Zahl von 1 bis (2a + 2) ist und
   b gleich (2a + 2 - c) ist.

3. Zusammensetzung nach Anspruch 2, worin das Kettenübertragungsmittel während der Reaktion in einer Menge von 0,01 bis 0,3 Mol-%, bezogen auf die Gesamtmolzahl der Komponenten, zugegeben worden ist.

4. Zusammensetzung nach Anspruch 2 und 3, worin das Kettenübertragungsmittel $CF_2Br_2$ ist.

5. Zusammensetzung nach irgendeinem der Ansprüche 1 bis 4, worin die organische Polyhydroxyverbindung aus Di-, Tri- und Tetrahydroxyderivaten von Benzol, Naphthalin oder Anthracen und Bisphenolen der allgemeinen Formel

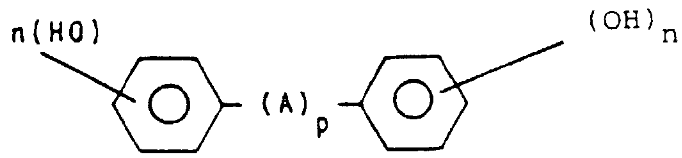

ausgewählt ist, worin A eine zweiwertige aliphatische, cycloaliphatische oder aromatische Gruppe mit bis zu 13 Kohlenstoffatomen ist oder eine Thio-, Oxy-, Carbonyl-, Sulfinyl- oder Sulfonylgruppe ist, und worin A gegebenenfalls durch mindestens ein Chlor-oder Fluoratom substituiert sein kann; p 0 oder 1 ist; n 1 oder 2 ist; und jeder aromatische Ring der Polyhydroxyverbindung gegebenenfalls durch mindestens einen Substituenten substituiert sein kann, der aus Chlor-, Fluor- oder Bromatomen oder einer -CHO Gruppe oder einer Carboxy- oder Acylgruppe der allgemeinen Formel -COR, wobei R OH oder eine Alkyl-, Aryl- oder Cycloalkylgruppe mit bis zu 8 Kohlenstoffatomen ist, ausgewählt sein kann.

**6.** Zusammensetzung nach irgendeinem der Ansprüche 1 bis 5, worin die quaternäre Ammoniumverbindung aus solchen der allgemeinen Formeln:

$$[N R_1 R_2 R_3 R_4]^+_q X^{(-)q} \quad (2)$$

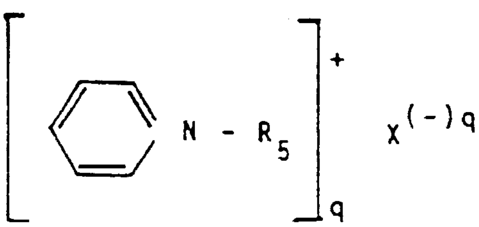

(3)

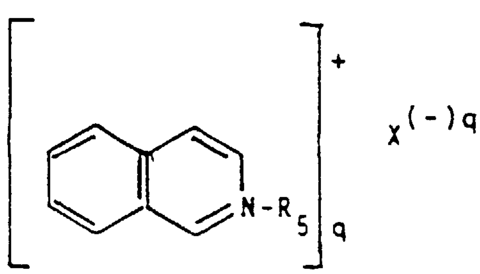

(4)

ausgewählt ist, worin $R_1$, $R_2$, $R_3$ und $R_4$ gleich oder verschieden voneinander eine Alkyl-, Fluoralkyl-, Aralkyl-, Polyoxyalkylen- oder Polyoxyfluoralkengruppe mit bis zu 20 Kohlenstoffatomen darstellen, mit der Maßgabe, daß mindestens zwei von $R_1$, $R_2$, $R_3$ und $R_4$ eine Alkyl- oder Aralkylgruppe sind; $R_5$ eine Alkylgruppe mit 1 bis 20 Kohlenstoffatomen ist; X ein Anion bedeutet, welches aus Hydroxy, Halogenid, Sulfat, Sulfit, Carbonat, Pentachlorthiophenolat, Tetrafluoroborat, Hexafluorosilikat, Hexafluorophosphat, Dimethylphosphat oder einem Carboxylat oder Dicarboxylat mit einer Alkyl- oder Aralkyl- oder Arylgruppe mit bis zu 20 Kohlenstoffatomen ausgewählt ist; q 1 oder 2 ist und die Wertigkeit von X bedeutet.

**7.** Zusammensetzung nach irgendeinem der Ansprüche 1 bis 5, worin die quaternäre Phosphoniumverbindung aus

solchen der allgemeinen Formel

$$[P\ R_6\ R_7\ R_8\ R_9]_r^+ Z^{-(r)} \quad (5)$$

ausgewählt ist, worin P außer Phosphor auch Arsen und Antimon bedeuten kann, und worin $R_6$, $R_7$, $R_8$ und $R_9$ ausgewählt sind aus Alkyl, Aryl, Arylalkyl, Alkenyl mit bis zu 20 Kohlenstoffatomen, Chlor, Fluor, Brom, Cyano, $-OR_{10}$ und $-COOR_{10}$ oder analogen substituierten Gruppen, wobei $R_{10}$ eine Alkyl-, Aryl-, Arylalkyl- oder Alkenylgruppe mit bis zu 20 Kohlenstoffatomen ist; Z ein Anion bedeutet, welches aus Halogenid, Sulfat, Sulfit, Carbonat, Pentachlorthiophenolat, Tetrafluoroborat, Hexafluorosilikat, Hexafluorophosphat, Dimethylphosphat oder einem Carboxylat oder Dicarboxylat mit einer Alkyl- oder Aralkyl- oder Alkenylgruppe mit bis zu 20 Kohlenstoffatomen ausgewählt ist; r 1 oder 2 ist und die Wertigkeit von Z bedeutet.

**8.** Zusammensetzung nach irgendeinem der Ansprüche 1 bis 5, worin die quaternäre Aminophosphoniumverbindung aus solchen der allgemeinen Formel

$$\left[ P\ (N\ R'R'')_s\ R'''_{4-s} \right]_m^+ Y^{m-} \quad (6)$$

ausgewählt ist, worin R', R" und R"' gleich oder verschieden voneinander eine Alkyl-, Cycloalkyl-, Aryl-, Arylalkyl-, Oxyalkyl- oder Polyoxyalkylgruppe mit einer freien oder veretherten Hydroxyendgruppe repräsentieren, bis zu 18 Kohlenstoffatome enthalten und gegebenenfalls als Substituenten ein oder mehrere Halogenatome, Cyano-, Hydroxy- oder Carboalkoxygruppen enthalten, und worin R' und R" miteinander durch ein Stickstoffatom verbunden sein können, um einen heterocyclischen Ring zu bilden;
s eine ganze Zahl von 1 bis 4 ist, m eine ganze Zahl von 1 bis 3 ist, gleich der Wertigkeit von Y, und Y ein organisches oder anorganisches Anion der Wertigkeit m ist.

**9.** Zusammensetzung nach irgendeinem der Ansprüche 1 bis 8, worin das organische Peroxid 2,5-Dimethyl-2,5-di-t-butylperoxyhexan oder das entsprechende Derivat von 3-Hexin ist.

**10.** Zusammensetzung nach irgendeinem der Ansprüche 1 bis 9, worin das vernetzende Peroxid-Coagens Triallylisocyanurat ist.

**Revendications**

**1.** Une composition consistant en

a) 100 parties en poids d'un copolymère consistant en 35% en poids de fluorure de vinylindène, 34% en poids d'hexafluoropropylène, 29% en poids de tétrafluoroéthylène, et 2% en poids de bromotétrafluorobutène ;
b) 1,7% parties en poids d'une composition consistant en 33% de sel d'organophosphonium plus 67% de fluoroélastomère ;
c) 4,0 parties en poids d'une composition consistant en 50% de composé dihydroxy aromatique plus 50% de fluoroélastomère ;
d) 6 parties en poids de ZnO ;
e) 2 parties en poids de $Ca(OH)_2$ ;
f) 60 parties en poids de noir MT
g) 25 parties en poids de silice ;
h) 1,3 parties en poids d'adjuvant de fabrication ;
i) 3 parties en poids d'isocyanurate de triallyle .
j) 3 parties en poids de 2,5-diméthyl-2,5-bis(t-butylperoxy)hexane.

**2.** Une composition selon la revendication 1, dans laquelle le brome a été introduit dans le fluoroélastomère par emploi, en tant qu'agent de transfert de chaîne pendant la copolymérisation, d'un produit de formule générale :

$$C_a W_b Br_c$$

dans laquelle :

- W peut être le fluor ou le chlore ;
- a est un entier de 1 à 4 ;
- c est un entier de 1 à (2a + 2) ;
- b est égal à (2a + 2 - c).

**3.** Une composition selon la revendication 2, dans laquelle l'agent de transfert de chaîne a été ajouté pendant la réaction en une proportion comprise entre 0,01 et 0,3% en moles, par rapport au nombre total de moles des composants.

**4.** Une composition selon la revendication 2 et 3, dans laquelle l'agent de transfert de chaîne est $CF_2Br_2$

**5.** Une composition selon l'une quelconque des revendications 1 à 4, dans laquelle le composé polyhvdroxylé organique est choisi parmi les dérivés di-, tri- et tétrahydroxylés du benzène, du naphtalène ou de l'antrhracène et des bisphénols de formule générale :

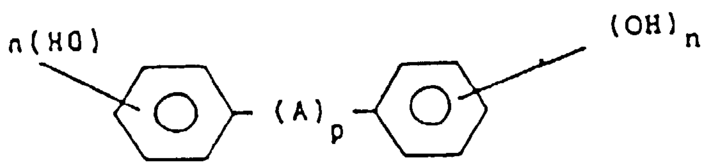

dans laquelle :

- A est un groupe difonctionnel aliphatique, cycloaliphatique ou aromatique, contenant jusqu'à 13 atomes de carbone, ou encore un groupe thio, oxy, carbonyle, sulfinyle ou sulfonyle et où A peut être éventuellement substitué par au moins un atome de chlore ou de fluor ;
- p vaut 0 ou 1 ;
- n vaut 1 ou 2 ; et

tout noyau aromatique du composé polyhydroxylé peut être éventuellement substitué par au moins un atome de chlore, de fluor ou de brome, ou par un groupe -CHO ou par un groupe carboxy ou acyle de formule générale -COR, R étant OH ou un groupe akyle, aryle ou cycloalkyle ayant jusqu'à 8 atomes de carbone.

**6.** Une composition selon l'une quelconque des revendications 1 à 5, dans laquelle le composé de l'ammonium quaternaire est choisi parmi ceux ayant les formules générales suivantes :

$$[N R_1 R_2 R_3 R_4]_q^+ X^{(-)q} \quad (2)$$

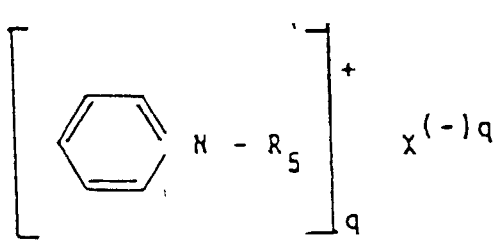

(3)

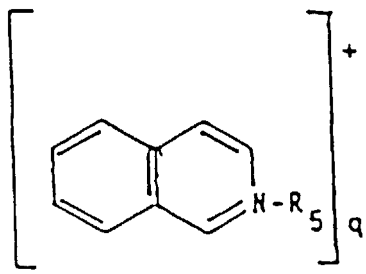 $X^{(-)q}$ (4)

dans lesquelles :

| | |
|---|---|
| $R_1$, $R_2$, $R_3$ et $R_4$ | sont identiques ou différents et représentent, chacun, un groupe alkyle, fluoroalkyle, aralkyle,polyoxyalkène ou polyoxyfluoroalkène contenant jusqu'à 20 atomes de carbone, à condition qu'au moins deux des radicaux $R_1$, $R_2$, $R_3$ et $R_4$ sont des groupes alkyles ou aralkyles ; |
| $R_5$ | est un groupe alkyle contenant de 1 à 20 atomes de carbone ; |
| X | est un anion choisi parmi les anions hydroxyle, halogénure, sulfage, sulfite, carbonate, pentachlorothiophénolate, tétrafluoroborate, hexafluorosilicate, hexafluorophosphate,diméthylphosphate, carboxylate ou dicarboxylate comportant un groupe alkyle, aralkyle ou aryle ayant jusqu'à 20 atomes de carbone ; |
| q | vaut 1 ou 2 et représente la valence de X. |

**7.** Une composition selon l'une quelconque des revendications 1 à 5, dans laquelle le composé du phosphonium quaternaire est choisi parmi ceux ayant la formule générale suivante :

$$\{P\ R_6\ R_7\ R_8\ R_9\}^{+} Z^{-(r)} \qquad (5)$$

dans laquelle :

P peut, outre le phosphore, être aussi l'arsenic et l'antimoine, et où $R_6$, $R_7$, $R_8$ et $R_9$ sont chacun choisis parmi les groupes alkyle, aryle, arylalkyle, alkényle ayant jusqu'à 20 atomes de carbone, chloro, fluoro, bromo, cyano, $-OR_{10}$ et $-COOR_{10}$ ou des groupes substitués analogues, $R_{10}$ étant un groupe alkyle, aryle, arylalkyle ou alkényle ayant jusqu'à 20 atomes de carbone ;

Z est un anion choisi parmi les anions halogénure, sulfate, sulfite, carbonate, pentachlorothiophénolate, tétrafluoroborate, hexafluorosilicate, hexafluorophosphate,diméthylphosphate, carboxylate ou dicarboxylate ayant un groupe alkyle, aralkyle ou alkényle contenant jusqu'à 20 atomes de carbone ;

r vaut 1 ou 2 et représente la valence de Z.

**8.** Une composition selon l'une quelconque des revendications 1 à 5, dans laquelle le composé de l'aminophosphonium quaternaire est choisi parmi ceux ayant la formule générale :

$$\left[ P\ (N\ R'\ R'')_s\ R'''_{4-s} \right]^{+}_{m} Y^{m-} \qquad (6)$$

dans laquelle :

R', R" et R"' sont identiques ou différents et représentent chacun un groupe alkyle, cycloalkyle, aryle, arylakyle, oxyalkyle ou polyoxyalkyle avec un groupe terminal hydroxy libre ou éthérifié, contenant jusqu'à 18 atomes de carbone et contenant éventuellement en tant que substituants, un ou plusieurs atomes d'halogène ou groupes cyano, hydroxy ou carboalkoxy, ou R' et R" peuvent être liés l'un à l'autre au moyen d'un atome d'azote pour former un noyau hétoérocyclique ;

s est un entier de 1 à 4,

m est un entier de 1 à 3, égal à la valence de l'ion Y . et

Y est un anion organique ou minéral ayant la valence m.

**9.** Une composition selon l'une quelconque des revendications 1 à 8, dans laquelle le peroxyde organique est le 2,5-diméthyl-2,5-di-t-butylperoxyhexane ou le dérivé 3-hexine correspondant.

**10.** Une composition selon l'une quelconque des revendications 1 à 9, dans laquelle le co-agent de réticulation au peroxyde est l'isocyanurate de triallyle.